# EUROPEAN PATENT APPLICATION

(11) **EP 4 671 092 A1**
(43) Date of publication of application: **31.12.2025**
(21) Application number: 23923222.6
(22) Date of filing: 28.12.2023
(51) Int. Cl.: B62D 5/04

(54) **VEHICLE STEER-BY-WIRE MECHANISM**

(30) Priority: 21.02.2023 WO PCT/JP2023/006131
(71) Applicant: Nissan Motor Co., Ltd., Kanagawa 221-0023 (JP)
(72) Inventor: SUGAWARA Naoto, Atsugi-shi, Kanagawa 243-0123 (JP); NARASAKI Takuya, Atsugi-shi, Kanagawa 243-0123 (JP)
(74) Representative: Global IP Europe Patentanwaltskanzlei
(86) International application number: PCT/JP2023/047254
(87) International publication number: WO 2024/176630

(57) **Abstract**

A steer-by-wire mechanism for a vehicle (1) includes: a first steering shaft (2) configured to transmit a steering reaction force to a steering unit; a second steering shaft (3) configured to transmit a wheel turning force to a turning wheel; and a first actuator (28). The first actuator (28) includes a first motor (22) configured to generate the wheel turning force. The first actuator (28) is arranged on a vehicle interior side with respect to a dash panel (16).

## Description

### TECHNICAL FIELD

The present invention relates to a steer-by-wire mechanism for a vehicle.

### BACKGROUND

Patent Literature 1 discloses a steer-by-wire vehicle steering apparatus. In this vehicle steering apparatus, a steering wheel and a reaction force motor that applies a reaction force to the steering wheel in the direction opposite to the steering direction are connected by a pair of transmission cables. The transmission cables transmit the reaction force generated by the motor to the steering wheel, allowing the motor to be arranged outside the vehicle interior.

### CITATION LIST

### PATENT LITERATURE

Patent Literature 1: JP 2002-225733 A

### SUMMARY OF INVENTION

### TECHNICAL PROBLEM

In the vehicle steering apparatus of Patent Literature 1, the steering motor and the reaction force motor arranged outside the vehicle interior may be exposed to water during driving in rain or when washing the vehicle. Therefore, these motors are required to have high watertightness, which makes the structure complicated.

An object of the present invention is to simplify the structure of motors in a steer-by-wire mechanism for a vehicle.

### TECHNICAL SOLUTION

A steer-by-wire mechanism according to an aspect of the present invention includes: a first steering shaft configured to transmit a steering reaction force to a steering unit; a second steering shaft configured to transmit a wheel turning force to a turning wheel; and a first actuator. The first actuator includes a first motor configured to generate the wheel turning force. The first actuator is arranged on a vehicle interior side with respect to a dash panel.

### ADVANTAGEOUS EFFECTS

The above steer-by-wire mechanism makes it possible to simplify the structure of motors.

### BRIEF DESCRIPTION OF DRAWINGS

[FIG. 1] FIG. 1 is a plan view of a steer-by-wire mechanism according to an embodiment viewed from above in a direction perpendicular to the column.
[FIG. 2] FIG. 2 is a side view of the steer-by-wire mechanism in FIG. 1.
[FIG. 3] FIG. 3 is a plan view of the steer-by-wire mechanism in FIG. 1 viewed from above in a direction perpendicular to the column.
[FIG. 4] FIG. 4 is a perspective view of a main part of the steer-by-wire mechanism in FIG. 1.
[FIG. 5] FIG. 5 is a cross-sectional view of a main part of the steer-by-wire mechanism in FIG. 1.

### DESCRIPTION OF EMBODIMENTS

Hereinafter, a steer-by-wire mechanism according to an embodiment will be described below with reference to the drawings. In the following descriptions, configurations having the same functions as those already described are denoted by the same reference numerals, and descriptions thereof will be omitted. FR and RR in each figure indicate a front side and a rear side in a vehicle front-rear direction, respectively, LH and RH indicate a left side and a right side in a vehicle width direction, respectively, and UP and DN indicate an upper side and a lower side, respectively. In the following descriptions, the left side and the right side in the vehicle width direction, and the front side and the rear side in the vehicle front-rear direction are simply referred to as "left side", "right side", "front side", and "rear side", respectively.

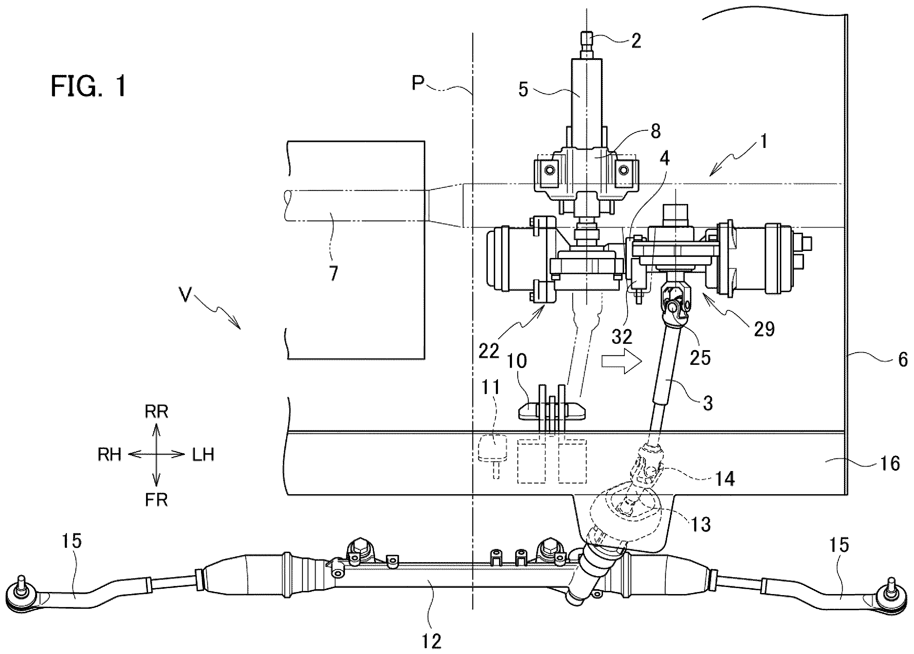

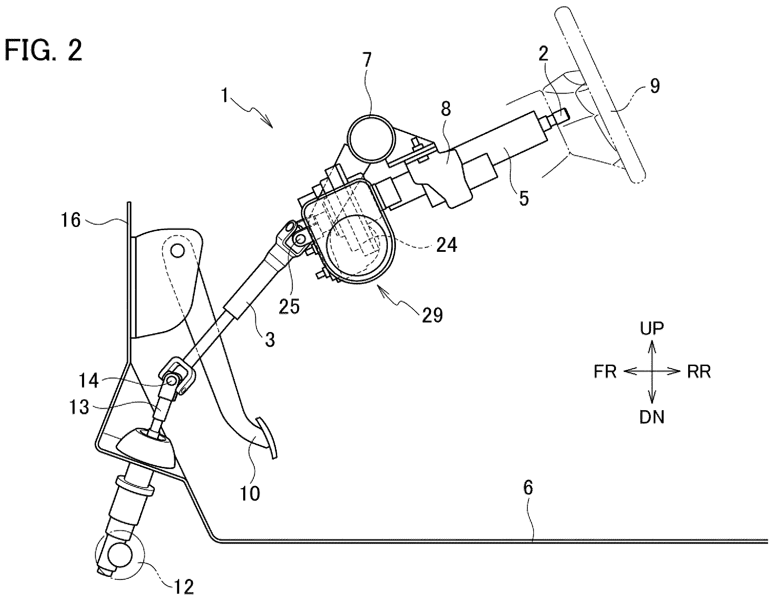

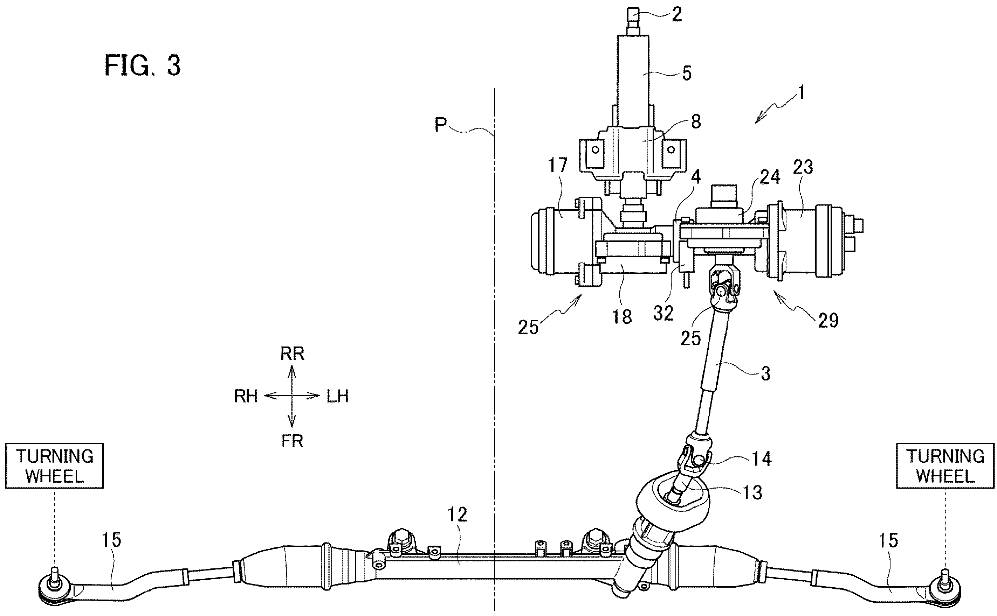

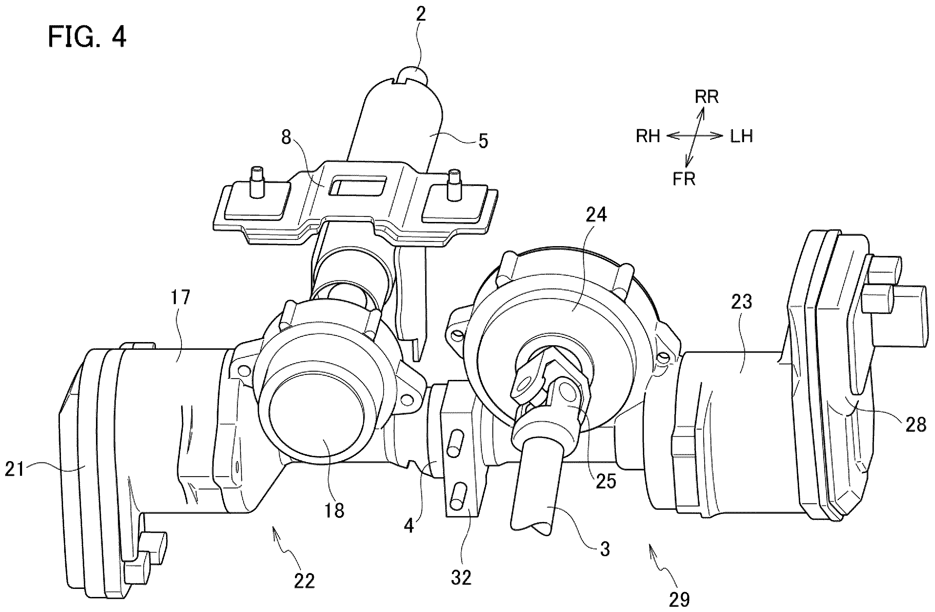

As illustrated in FIGS. 1 to 5, the steer-by-wire mechanism 1 according to the embodiment is applied to a steer-by-wire steering system of a vehicle V. The vehicle V is a left-hand drive vehicle, and the front-left seat is the driver seat. The steer-by-wire mechanism 1 includes a first steering shaft 2 to which a steering rotation of the driver is input, and a second steering shaft 3 which transmits a wheel turning force for turning a turning wheel to the turning wheel. Further, the steer-by-wire mechanism 1 includes a clutch 4 mechanically connecting the first steering shaft 2 and the second steering shaft 3.

When the steer-by-wire system operates normally, the first steering shaft 2 and the second steering shaft 3 are mechanically separated from each other by the clutch 4. However, if an abnormality occurs in the steer-by-wire system, the first steering shaft 2 and the second steering shaft 3 are mechanically connected to each other by the clutch 4. This makes it possible to directly turn the turning wheel mechanically, using the steering rotation input from the driver to the first steering shaft 2.

The first steering shaft 2 is also called a column shaft, and housed inside a steering column 5 so as to be rotatable about the center axis thereof. The steering column 5 is attached to a steering member 7 fixed to a vehicle body 6. The steering member 7 is bridged between the left side panel and the right side panel of the vehicle body 6. The steering column 5 is fixed to the steering member 7 via a column bracket 8 fixed to the steering column 5. A steering wheel 9 that is a steering unit is attached to the input end of the first steering shaft 2, and the steering rotation from the driver is input to the first steering shaft 2 via the steering wheel 9. The shape of the steering unit is not particularly limited, and the steering unit may have a circular shape, a D-shape, a U-shape, or the like, for example.

A brake pedal 10 and an accelerator pedal 11 are arranged at the front lower side of the steering column 5. The brake pedal 10 and the accelerator pedal 11 are suspended-type pedals. The vehicle V of the present embodiment is equipped with an automatic transmission and is not provided with a clutch pedal.

The second steering shaft 3 is also called an intermediate shaft, and has an output end that is mechanically connected to a pinion gear shaft 13 of a steering gear box 12 via a cardan joint 14. The cardan joint 14 is a type of universal joint and has non-constant speed characteristics. That is, in a case where the center axis of the second steering shaft 3 has an angle with respect to the center axis of the pinion gear shaft 13, when the second steering shaft 3 rotates at a constant speed around the center axis thereof, the pinion gear shaft 13 rotates at a non-constant speed around the center axis thereof. As a result, fluctuations also occur in the torque transmitted between the second steering shaft 3 and the pinion gear shaft 13.

The steering gear box 12 includes a pinion gear formed on the pinion gear shaft 13, and a rack gear formed on a rack bar (not illustrated) in the steering gear box 12. When the pinion gear shaft 13 rotates, the rotational motion is converted to linear motion by meshing between the pinion gear and the rack gear, and the rack bar is moved in its axial direction by the converted linear motion. As the rack bar moves in the axial direction, a wheel turning drive force is transmitted to the knuckle arm of the hub carrier of the turning wheel via each tie rod 15 swingably attached to both ends of the rack bar, and thus the turning wheel is turned.

The pinion gear shaft 13 of the steering gear box 12 penetrates through a dash panel 16, and the second steering shaft 3 is arranged on the vehicle interior side with respect to the dash panel 16. The dash panel 16 is a partition plate that separates the engine room or motor room from the vehicle interior in the vehicle front-rear direction, and is also called a front bulkhead.

The steer-by-wire mechanism 1 includes a reaction force motor 17 that is a second motor. The reaction force motor 17 applies a steering reaction force to the first steering shaft 2 that is mechanically separated from the second steering shaft 3. The output shaft 20 of the reaction force motor 17 is mechanically connected to the first steering shaft 2 via a speed reducer for reaction force 18 that is a second speed reducer. The speed reducer for reaction force 18 is constituted of a worm drive mechanism, and includes a reaction force worm wheel 19 provided on the first steering shaft 2 and a reaction force worm shaft 20 that is an output shaft 20 of the reaction force motor 17.

The output rotation of the reaction force motor 17 is reduced in speed and torque-amplified by the speed reducer for reaction force 18, and transmitted as a steering reaction force to the steering wheel 9 attached to the first steering shaft 2. The reaction force motor 17 is integrally configured with a reaction force motor ECU (electrical control unit) 21 that controls the reaction force motor 17. The reaction force motor 17, the speed reducer for reaction force 18, and the reaction force motor ECU 21 constitute a reaction force actuator 22 that is a second actuator, and are arranged on the vehicle interior side with respect to the dash panel 16.

In other words, the speed reducer for reaction force 18 is provided between the reaction force motor 17 and the first steering shaft 2, and reduces the rotation of the reaction force motor 17 in speed and transmits the rotation to the first steering shaft 2. The steering rotation of the driver is input to the first steering shaft 2 via the steering wheel 9. At the same time, the steering reaction force generated by the reaction force motor 17 is transmitted to the first steering shaft 2 via the speed reducer for reaction force 18. The first steering shaft 2 transmits the steering reaction force to the steering wheel 9, and the driver can feel the steering reaction force when steering the steering wheel 9.

The steer-by-wire mechanism 1 includes a wheel turning motor 23 that is a first motor. The wheel turning motor 23 applies a wheel turning force for turning a turning wheel to the second steering shaft 3 that is mechanically separated from the first steering shaft 2. The output shaft 27 of the wheel turning motor 23 is mechanically connected to the second steering shaft 3 via a speed reducer for wheel turning 24 that is a first speed reducer. The speed reducer for wheel turning 24 is constituted of a worm drive mechanism, and includes a wheel turning worm wheel 26 that is mechanically connected to the second steering shaft 3 via a cardan joint 25, and a wheel turning worm shaft 27 that is the output shaft 27 of the wheel turning motor 23.

The output rotation of the wheel turning motor 23 is reduced in speed and torque-amplified by the speed reducer for wheel turning 24, and transmitted as a wheel turning force to the pinion gear shaft 13 of the steering gear box 12 that is mechanically connected to the second steering shaft 3. The wheel turning motor 23 is integrally configured with a wheel turning motor ECU 28 that controls the wheel turning motor 23. The wheel turning motor 23, the speed reducer for wheel turning 24, and the wheel turning motor ECU 28 constitute a wheel turning actuator 29 that is a first actuator, and are arranged on the vehicle interior side with respect to the dash panel 16.

In other words, the speed reducer for wheel turning 24 is provided between the wheel turning motor 23 and the second steering shaft 3, and reduces the rotation of the wheel turning motor 23 in speed and transmits the rotation to the second steering shaft 3. In addition, the wheel turning force generated by the wheel turning motor 23 is transmitted to the second steering shaft 3 via the speed reducer for wheel turning 24, and is transmitted from the second steering shaft 3 to the turning wheel via the steering gearbox 12.

A publicly known backlash suppression mechanism may be built into each worm drive mechanism. The backlash suppression mechanism suppresses a backlash by biasing the worm shafts 20 and 27 toward the worm wheels 19 and 26, utilizing the elastic restoring force of the spring. Thus, a backlash in the speed reducer for reaction force 18 and the speed reducer for wheel turning 24 can be sufficiently suppressed.

The clutch 4 is provided between the reaction force actuator 22 and the wheel turning actuator 29, and has an engaging portion 4A on the reaction force actuator 22 side and an engaging portion 4B on the wheel turning actuator 29 side. The respective engaging portions 4A and 4B are rotatable around the clutch center axis O parallel to the vehicle width direction. The rotation shaft 20 is connected to the engaging portion 4A so as to rotate integrally with the engaging portion 4A. The rotation shaft 27 is connected to the engaging portion 4B so as to rotate integrally with the engaging portion 4B.

In the present embodiment, the clutch 4 is a friction-type electromagnetic clutch. When not energized, the friction plates serving as the engaging portions 4A and 4B are pressed together by the biasing force of the internal spring, and the clutch 4 is in an engaged state. When energized, the pressing of the friction plates is released against the biasing force of the spring by the electromagnetic force generated by the internal coil, and the clutch 4 is in a disengaged state. That is, the clutch 4 can be switched between the engaged state in which torque can be transmitted between the rotation shaft 20 and the rotation shaft 27 and the disengaged state in which the torque transmission is interrupted.

In the present embodiment, the rotation shaft 20 is the reaction force worm shaft 20 of the speed reducer for reaction force 18, and the output shaft 20 of the reaction force motor 17. In addition, the rotation shaft 27 is the wheel turning worm shaft 27 of the speed reducer for wheel turning 24, and the output shaft 27 of the wheel turning motor 23. Here, the rotation shaft 20, the reaction force worm shaft 20, and the output shaft 20 of the reaction force motor 17 may be formed of one shaft member, or may be formed of a plurality of shaft members connected to each other by a well-known coupling method such as a spline coupling method. Similarly, the rotation shaft 27, the wheel turning worm shaft 27, and the output shaft 27 of the wheel turning motor 23 may be formed of one shaft member, or may be formed of a plurality of shaft members.

In the present embodiment, the center axis of the rotation shaft 20 and the center axis of the rotation shaft 27 are arranged on the clutch center axis O, which is the center axis of the clutch 4. Accordingly, the respective central axes of the reaction force worm shaft 20, the output shaft 20 of the reaction force motor 17, the wheel turning worm shaft 27, and the output shaft 27 of the wheel turning motor 23 are also arranged on the clutch center axis O.

The clutch 4 is housed in the casing 30. The speed reducer for reaction force 18 and the speed reducer for wheel turning 24 are also housed in the casing 30. The casing 30 is fixed to the steering member 7 by a fixing portion 32 provided at a position corresponding to the engaging portions 4A and 4B of the clutch 4.

A notch 31, which is a fragile portion, is formed in the casing 30. In addition, a small-diameter portion 33, which is a fragile portion, is formed on the rotation shaft 20. In the small-diameter portion 33, the outer diameter of the rotation shaft 20 is locally reduced. The small-diameter portion 33 is arranged in the vicinity of the notch 31 of the casing 30. The notch 31 and the small-diameter portion 33 are arranged between the speed reducer for reaction force 18 and the engaging portion 4A of the clutch 4 in the vehicle width direction.

The reaction force motor ECU 21 and the wheel turning motor ECU 28 are connected to the communication network of the vehicle V such that they can communicate with each other. The reaction force motor ECU 21 is connected to various sensors such as a torque sensor built into the steering column 5 in addition to the clutch 4. The reaction force motor ECU 21 calculates the wheel turning angle of the turning wheel based on the detected values of various sensors such as a detected torque of a torque sensor, information on the running state of the vehicle V, or the like, and transmits the calculated result to the wheel turning motor ECU 28 to control the wheel turning motor 23 via the wheel turning motor ECU 28.

The reaction force motor ECU 21 and the wheel turning motor ECU 28 determine whether the steer-by-wire system is normal or abnormal while communicating with each other. When the reaction force motor ECU 21 and the wheel turning motor ECU 28 determine that there is no abnormality in the steer-by-wire system, they perform the steer-by-wire control by disengaging the clutch 4. When the steer-by-wire control is performed, the reaction force motor ECU 21 generates a steering reaction force on the first steering shaft 2 using the reaction force motor 17, and the wheel turning motor ECU 28 turns the turning wheel using the wheel turning motor 23. At this time, the reaction force motor 17 and the wheel turning motor 23 are mechanically separated from each other.

Meanwhile, for example, when either the reaction force motor 17 or the wheel turning motor 23 does not operate normally, the reaction force motor ECU 21 or the wheel turning motor ECU 28 determines that an abnormality has occurred in the steer-by-wire system, and stops the steer-by-wire control. When the steer-by-wire control is not performed, the reaction force motor ECU 21 or the wheel turning motor ECU 28 mechanically connects the steering wheel 9 to the turning wheel by engaging the clutch 4 for the fail-safe purpose. Note that "connection to the turning wheel" refers to the connection related to the turning mechanism of the turning wheel, not the connection related to the rotation mechanism of the turning wheel.

When the steer-by-wire control is not performed, the first steering shaft 2 and the second steering shaft 3 are mechanically connected to each other by mechanically connecting the output shaft 20 and the output shaft 27 with the clutch 4. As a result, the steering wheel 9 is mechanically connected to the turning wheel, thereby making it possible for the driver to turn the turning wheel by rotating the steering wheel 9.

Further, the speed reducer for reaction force 18 functions as a speed increaser that increases the rotation of the first steering shaft 2 in speed and transmits the rotation to the reaction force worm shaft 20. The steering rotation of the driver input from the steering wheel 9 to the first steering shaft 2 is increased in speed and transmitted to the reaction force worm shaft 20 via the reaction force worm wheel 19. The steering rotation transmitted to the reaction force worm shaft 20 is transmitted to the wheel turning worm shaft 27 at a constant speed via the clutch 4 that is in the engaged state, and is further reduced in speed by the speed reducer for wheel turning 24 and transmitted to the second steering shaft 3. When either the reaction force motor 17 or the wheel turning motor 23 can be driven, the motor can be used as an assist force generation source for the power steering function.

In the present embodiment, the center axis of the first steering shaft 2, that is, the rotation center axis of the reaction force worm wheel 19, is in a geometrically skew position with respect to the center axis of the reaction force worm shaft 20. That is, the center axis of the first steering shaft 2 and the clutch center axis O do not intersect and are not parallel to each other. The angle formed by these two central axes is approximately 90 degrees. In addition, the rotation center axis of the wheel turning worm wheel 26 is in a geometrically skew position with respect to the center axis of the wheel turning worm shaft 27. That is, the rotation center axis of the wheel turning worm wheel 26 and the clutch center axis O do not intersect and are not parallel to each other. The angle formed by these two central axes is approximately 90 degrees. Here, an angle formed by two straight lines in the skew positions in the three-dimensional space is, when one straight line is translated so as to intersect with the other straight line, an angle formed by the two straight lines on a plane including the intersected two straight lines.

In addition, the center axis of the first steering shaft 2, the center axis of the second steering shaft 3, and the clutch center axis O are in the geometrically skew positions with respect to one another. That is, the center axis of the first steering shaft 2, the center axis of the second steering shaft 3, and the clutch center axis O do not intersect one another and are not parallel to one another. The first steering shaft 2 and the second steering shaft 3 are arranged to be offset in the vehicle width direction. In the present embodiment, the second steering shaft 3 is arranged on the left side with respect to the first steering shaft 2.

In the present embodiment, the second steering shaft 3 is arranged on the same side as the first steering shaft 2 and outward of the first steering shaft 2 in the vehicle width direction with respect to the reference plane P (see FIG. 1). The reference plane P is a plane perpendicular to the vehicle width direction passing through the center of the vehicle V in the vehicle width direction. Further, in the present embodiment, the clutch 4, the reaction force actuator 22, and the wheel turning actuator 29 are arranged to be aligned along the direction intersecting the vertical plane including the center axis of the first steering shaft 2. That is, the angle formed by the vertical plane, and the alignment direction of the clutch 4, the reaction force actuator 22, and the wheel turning actuator 29 is greater than 0 degrees.

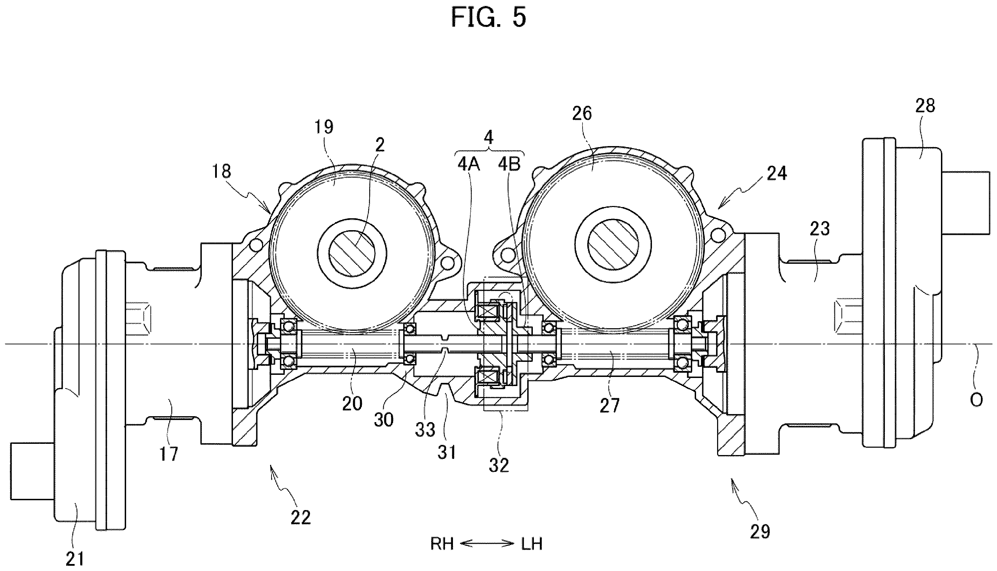

The operation and effect of the steer-by-wire mechanism 1 according to the present embodiment will be described.
(1) The steer-by-wire mechanism 1 includes the first steering shaft 2 configured to transmit a steering reaction force to the steering wheel 9, the second steering shaft 3 configured to transmit a wheel turning force to a turning wheel, and the wheel turning actuator 29. The wheel turning actuator 29 has the wheel turning motor 23 configured to generate a wheel turning force. The wheel turning actuator 29 is arranged on the vehicle interior side with respect to the dash panel 16. That is, since the wheel turning motor 23 is arranged in the vehicle interior, high watertightness is not required, and there is no need to provide the wheel turning motor 23 with a watertight structure. This makes it possible to simplify the structure of the wheel turning motor 23, thereby reducing the manufacturing cost. In addition, the heat radiation from the wheel turning motor 23 can be promoted compared to the case where a watertight structure is adopted.
(2) The steer-by-wire mechanism 1 includes the reaction force actuator 22. The reaction force actuator 22 has the reaction force motor 17 configured to generate a steering reaction force, and the speed reducer for reaction force 18 configured to reduce the rotation of the reaction force motor 17 in speed and transmit the rotation to the first steering shaft 2. The reaction force actuator 22 is arranged on the vehicle interior side with respect to the dash panel 16. That is, since the reaction force motor 17 is arranged in the vehicle interior, high watertightness is not required, and thus there is no need to provide the reaction force motor 17 with a watertight structure. This makes it possible to simplify the structure of the reaction force motor 17, thereby reducing the manufacturing cost. In addition, the heat radiation from the reaction force motor 17 can be promoted compared to the case where a watertight structure is adopted.
(3) The steer-by-wire mechanism 1 includes the clutch 4 configured to mechanically connect the first steering shaft 2 and the second steering shaft 3 by mechanically connecting the output shaft 20 of the reaction force motor 17 and the output shaft 27 of the wheel turning motor 23. Therefore, if an abnormality occurs in the steer-by-wire system, the first steering shaft 2 and the second steering shaft 3 can be mechanically connected to each other by the clutch 4. This makes it possible to turn the turning wheel by inputting the steering rotation to the first steering shaft 2 from the driver via the steering wheel 9, thereby improving the limp-home performance.
(4) In the steer-by-wire mechanism 1, the clutch 4, the reaction force actuator 22, and the wheel turning actuator 29 are arranged to be aligned along the direction intersecting the vertical plane including the center axis of the first steering shaft 2. Therefore, compared to the case where the clutch 4, the reaction force actuator 22, and the wheel turning actuator 29 are arranged to be aligned on the vertical plane, the clutch 4, the reaction force actuator 22, and the wheel turning actuator 29 can be arranged in the vehicle interior in a space-efficient manner.
(5) In the steer-by-wire mechanism 1, the output shaft 20 of the reaction force motor 17, the reaction force worm shaft 20, the output shaft 27 of the wheel turning motor 23, and the wheel turning worm shaft 27 are arranged along the clutch center axis O parallel to the vehicle width direction. Therefore, the reaction force actuator 22, the clutch 4, and the wheel turning actuator 29 can be arranged in the vehicle interior in an even more space-efficient manner.
(6) In the steer-by-wire mechanism 1, the center axis of the first steering shaft 2, the center axis of the second steering shaft 3, and the clutch center axis O do not intersect one another and are not parallel to one another. For this reason, the degree of freedom in the arrangement of the second steering shaft 3 with respect to the first steering shaft 2 is further improved. Specifically, the second steering shaft 3 can be arranged to be offset in the vehicle width direction with respect to the first steering shaft 2. This improves the degree of freedom in design regarding the arrangement of the brake pedal 10 and the accelerator pedal 11. In addition, since the brake pedal 10 and the accelerator pedal 11 move back and forth, interference with the intermediate shaft is usually a problem. To avoid this interference, the pedal stay may be lengthened or bent. In the steer-by-wire mechanism 1, the second steering shaft 3, which corresponds to the intermediate shaft, can be arranged to be offset in the vehicle width direction relative to the first steering shaft 2, allowing for optimal arrangement and shaping of the pedals.
(7) In the steer-by-wire mechanism 1, the second steering shaft 3 is arranged on the same side as the first steering shaft 2 and outward of the first steering shaft 2 in the vehicle width direction with respect to the reference plane P. That is, the first steering shaft 2 and the second steering shaft 3 are arranged to be offset in the vehicle width direction. Accordingly, even if the collision load is input to the second steering shaft 3 at the time of the front collision of the vehicle V, the collision load is prevented from being directly transmitted to the first steering shaft 2. This makes it possible to suppress the rearward movement of the steering wheel 9, thereby improving the occupant protection performance. In addition, since the second steering shaft 3 is arranged outward of the first steering shaft 2 in the vehicle width direction, the space of the central region in the vehicle width direction at the front part of the vehicle interior can be effectively utilized.
(8) In the steer-by-wire mechanism 1, the small-diameter portion 33, which is a fragile portion, is provided between the speed reducer for reaction force 18 and the engaging portion 4A of the clutch 4. The small-diameter portion 33 is deformed or broken by the collision load input to the second steering shaft 3 at the time of collision of the vehicle V. This reduces the collision load input to the first steering shaft 2 more reliably, and then further suppresses the rearward movement of the steering wheel 9 at the time of collision of the vehicle, thereby further improving the occupant protection performance. In addition, in the steer-by-wire mechanism 1, the notch 31, which is a fragile portion, is formed at a position in the vicinity of the small-diameter portion 33 even in the casing 30. Therefore, the steer-by-wire mechanism 1 deforms or breaks the casing 30 from the notch 31 as a starting point at the time of collision of the vehicle V, thereby deforming or breaking the small-diameter portion 33 more reliably. Further, since the fragile portion is provided between the speed reducer for reaction force 18 and the engaging portion 4A of the clutch 4, the distance between the fragile portion and the second steering shaft 3 becomes greater compared to the case where the fragile portion is provided on the wheel turning actuator 29 side from the above range. Therefore, the fragile portion can be deformed or broken more reliably by the collision load input to the second steering shaft 3.
(9) In the embodiment described above, the diameter of the wheel turning worm wheel 26 of the speed reducer for wheel turning 24 is larger than the diameter of the reaction force worm wheel 19 of the speed reducer for reaction force 18 (see FIG. 5). That is, when the speed reducing ratio of the speed reducer for wheel turning 24 is smaller than that of the speed reducer for reaction force 18 and the clutch 4 is in the engaged state, the rotation of the steering wheel 9 is reduced in speed by the speed reducer for reaction force 18 and the speed reducer for wheel turning 24 and transmitted to the second steering shaft 3. Therefore, when the steer-by-wire control is not performed, the steering force required for wheel turning can be reduced.

The embodiment described above is a mere example which is described to facilitate understanding of the invention. The technical scope of the invention is not limited to the specific technical matters disclosed in the embodiment, and includes various modifications, changes, alternative techniques, and the like which can be easily derived therefrom.

For example, in the embodiment described above, the small-diameter portion 33 is formed on the rotation shaft 20 as a fragile portion. However, a flexible coupling may be provided at the position of the small-diameter portion 33 as a fragile portion. The flexible coupling can transmit rotational power while allowing eccentricity, angular deflection, and vibration of the rotation shaft 20. As the flexible coupling, various types of flexible couplings such as a slit-type flexible coupling, a disk-type flexible coupling, and an Oldham-type flexible coupling can be used.

Further, in the embodiment described above, the clutch center axis O is positioned on the lower side with respect to the rotation center axis of the reaction force worm wheel 19. However, the clutch center axis O may be positioned on the upper side with respect to the rotation center axis of the reaction force worm wheel 19. Similarly, in the embodiment described above, the clutch center axis O is positioned on the lower side with respect to the rotation center axis of the wheel turning worm wheel 26. However, the clutch center axis O may be positioned on the upper side with respect to the rotation center axis of the wheel turning worm wheel 26. In addition, the rotation center axis of the reaction force worm wheel 19 and the rotation center axis of the wheel turning worm wheel 26 may be positioned opposite to each other relative to the clutch center axis O.

Further, the clutch 4 in the embodiment described above is a disk-type friction clutch. However, the clutch 4 may be another type of friction clutch, such as a drum-type friction clutch or a cone-type friction clutch. Alternatively, the clutch 4 may be another type of clutch, such as a roller clutch or a meshing clutch like a tooth clutch.

Further, in the embodiment described above, although the speed reducer for reaction force 18 and the speed reducer for wheel turning 24 using a worm drive mechanism are used, other types of speed reducers may be used. For example, a speed reducer can be formed, using a bevel gear or the like. However, the worm drive mechanism has the advantage of achieving a large speed reducing ratio, and also has the advantage of incorporating the backlash suppression mechanism described above.

Further, in the embodiment described above, the speed reducing ratio of the speed reducer for wheel turning 24 is set to be smaller than that of the speed reducer for reaction force 18; however, the relationship between the speed reducing ratios is not particularly limited. The speed reducing ratio of the speed reducer for wheel turning 24 may be set to be larger than that of the speed reducer for reaction force 18, or both speed reducing ratios may be set to be the same.

Further, in the embodiment described above, although the steer-by-wire mechanism 1 is applied to a steer-by-wire steering system for a left-hand drive vehicle as an example, the embodiment is not limited thereto. The steer-by-wire mechanism 1 can be applied to a right-hand drive vehicle by arranging the respective components in such a manner that they have a plane symmetry with respect to the reference plane P.

This application claims priority based on international application PCT/JP2023/006131, filed on February 21, 2023, and the entire contents of the international application are incorporated herein by reference.

### REFERENCE SIGNS LIST

- 1: Steer-by-wire mechanism
- 2: First steering shaft
- 3: Second steering shaft
- 4: Clutch
- 4A, 4B: Engaging portion of clutch
- 16: Dash panel
- 17: Reaction force motor (second motor)
- 18: Speed reducer for reaction force (second speed reducer)
- 22: Reaction force actuator (second actuator)
- 23: Wheel turning motor (first motor)
- 24: Speed reducer for wheel turning (first speed reducer)
- 29: Wheel turning actuator (first actuator)
- 31: Notch (fragile portion)
- 33: Small-diameter portion (fragile portion)
- P: Reference plane (plane perpendicular to vehicle width direction)
- V: Vehicle

## Claims

1. A steer-by-wire mechanism for a vehicle, comprising:
a first steering shaft configured to transmit a steering reaction force to a steering unit;
a second steering shaft configured to transmit a wheel turning force to a turning wheel; and
a first actuator including a first motor configured to generate the wheel turning force; wherein
the first actuator is arranged on a vehicle interior side with respect to a dash panel.

2. The steer-by-wire mechanism according to claim 1, further comprising a second actuator including a second motor configured to generate the steering reaction force and a second speed reducer configured to reduce a rotation of the second motor in speed and transmit the rotation to the first steering shaft, wherein
the second actuator is arranged on the vehicle interior side with respect to the dash panel.

3. The steer-by-wire mechanism according to claim 2, further comprising a clutch configured to mechanically connect the first steering shaft and the second steering shaft by mechanically connecting an output shaft of the first motor and an output shaft of the second motor, wherein
the clutch, the first actuator, and the second actuator are arranged to be aligned along a direction intersecting a vertical plane including a center axis of the first steering shaft.

4. The steer-by-wire mechanism according to claim 3, wherein a center axis of the first steering shaft, a center axis of the second steering shaft, and a center axis of the clutch do not intersect one another and are not parallel to one another.

5. The steer-by-wire mechanism according to any one of claims 1 to 4, wherein
the second steering shaft is arranged on the same side as the first steering shaft and outward of the first steering shaft in the vehicle width direction with respect to a plane perpendicular to the vehicle width direction passing through a center of the vehicle in the vehicle width direction.

6. The steer-by-wire mechanism according to claim 3 or 4, wherein
a fragile portion, which is deformed or broken by a collision load input to the second steering shaft at a time of collision of the vehicle, is provided between the second speed reducer and an engaging portion of the clutch.
